# EUROPEAN PATENT SPECIFICATION

(11) **EP 1 308 137 B1**
(45) Date of publication and mention of the grant of the patent: **17.05.2006**
(21) Application number: 02024904.1
(22) Date of filing: 05.11.2002
(51) Int. Cl.: A61C 9/00, B01F 7/16

(54) **System and means for mixing impression materials for dentistry applications and the like**
System und Gerät zum Mischen von Abdruckmaterialien für zahnärztliche Anwendungen und dergeleichen
Système et dispositif pour mélanger des matériaux d'impressions dentaires et analogues

(30) Priority: 06.11.2001 IT FO20010032
(43) Date of publication of application: 07.05.2003
(73) Proprietor: Presta, Antonio, 48100 Ravenna (IT)
(72) Inventor: Presta, Antonio, 48100 Ravenna (IT)
(74) Representative: Modiano, Micaela Nadia

(56) References cited:
- FR-A- 2 572 677
- US-A- 3 570 486
- PATENT ABSTRACTS OF JAPAN vol. 014, no. 334 (C-0742), 18 July 1990 (1990-07-18) & JP 02 122819 A (TORAY DOW CORNING SILICONE CO LTD), 10 May 1990 (1990-05-10)

## Description

There are some mixtures for dentistry applications that set so quickly that it is indispensable to prepare them at the time of use and only in the quantities required in each instance.

These mixtures comprise alginate mixtures and plaster mixtures: the former are used usually in dentists' surgeries as impression material and the latter are instead used in dental laboratories to produce the models.

Both with alginate and with plaster, it is a matter of mixing a substance in powder form with a water-based solution, and in both cases it is currently preferred to proceed manually, since the available mixing devices require, at the end of each mixing operation, accurate and immediate cleaning in order to avoid the formation of deposits that would compromise its subsequent reuse.

Similar problems are observed in the same field also with silicone-based impression materials, which are constituted by a gelatinous base and by a more or less fluid catalyst and must be mixed at the time of use because their compound, too, cures rather rapidly.

For the very purpose of minimizing the interval between the mixing of the compound and its use, the gelatinous base and the catalyst are often packaged so that they pass directly and simultaneously from their respective containers into a sort of spiral nozzle and arrive at the outlet already mixed by simply passing through said nozzle.

One negative aspect of such a manner of mixing silicone-based impression materials is the economic one, because so-called spiral nozzles are obviously of the single-use type and also because the compound that in each instance remains unused inside them is approximately as much as the compound that is actually used.

The aim of the present invention is to solve the practical and economic problems noted above.

This aim and these and other objects that will become better apparent hereinafter are achieved with the system according to appended claim 1. The automated functional system according to the invention, which after the automatic mixing of each individual dose allows, if necessary, to move on even immediately to the mixing of the subsequent ones, since it is no longer necessary to perform maintenance or cleaning between the two mixing operations.

The system that has been devised is in fact based mainly on the use of mixing units, which are interchangeable and reusable and are filled at the appropriate time with a specific quantity of the component in powder form to be mixed or of the gelatinous base to be catalyzed, so that they can be used when necessary, one at a time, in an apparatus that automatically adds thereto the water-based solution or catalyst required, mixes all the components by moving the rotary agitator with which said mixing unit is provided, opens the outlet of the unit and expels from said unit all of the compound by acting on a sort of plunger which also belongs to the mixing unit and is capable of freeing of any residue the agitators and the entire mixing chamber.

It is thus possible to move on even immediately to a new mixing unit and defer to another time the washing and sterilization in an autoclave of the units placed aside after use.

All this will become better apparent from the description that follows and from the accompanying drawings, wherein, merely by way of non-limitative example:

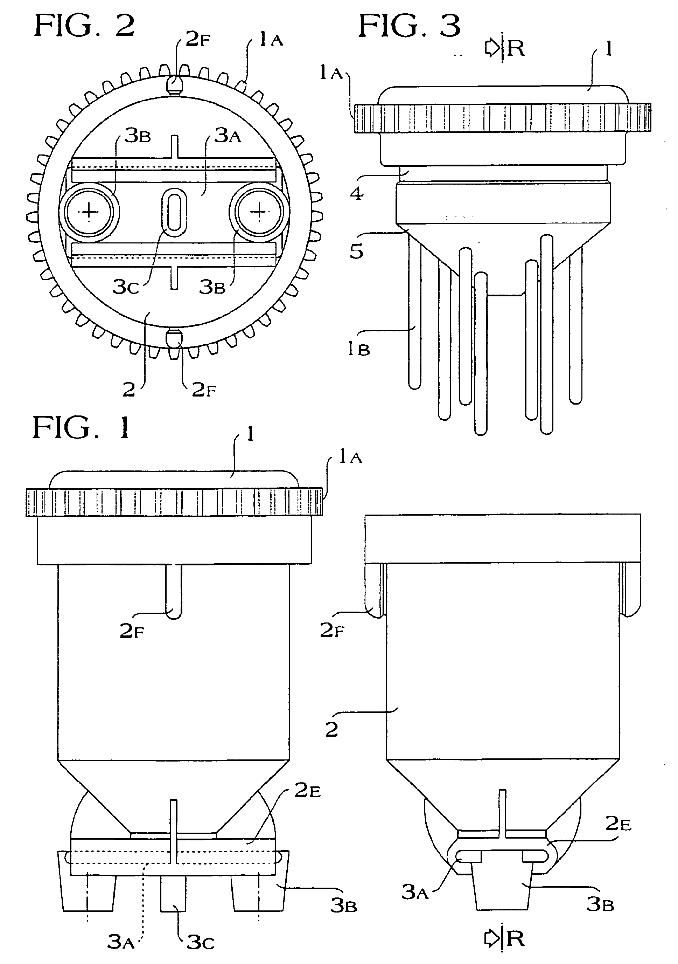

Figures 1 and 2 are respectively a side view and a bottom view of a preferred embodiment of the interchangeable mixing unit used by the invention;
Figure 3 is a view of the mixing unit in the open condition for introducing the component in powder form or the gelatinous base to be catalyzed;

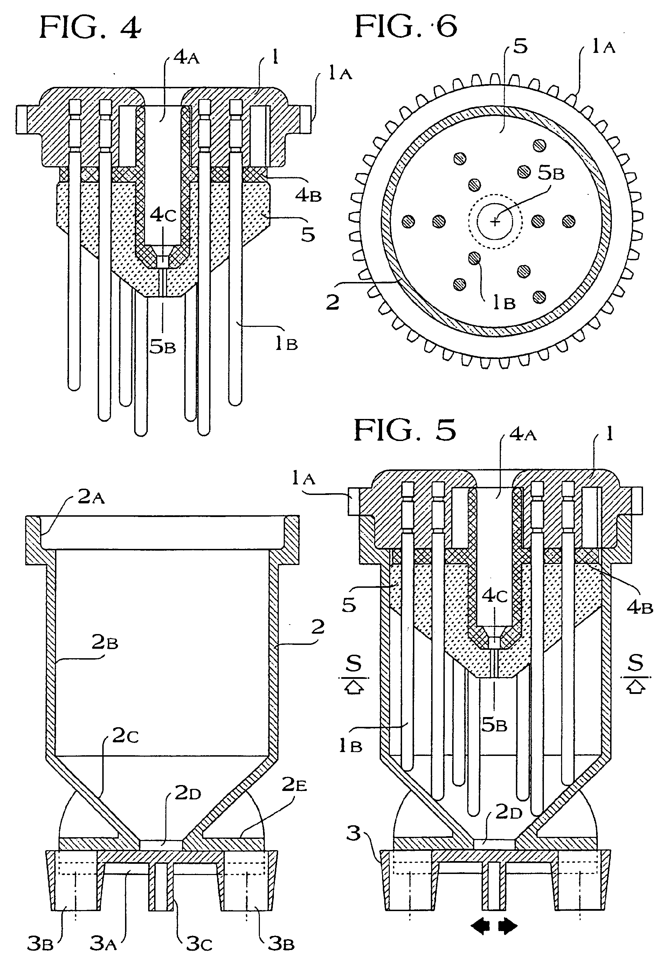

Figure 4 is a longitudinal sectional view, taken along the line R-R of Figure 3;
Figure 5 is a longitudinal sectional view of the mixing unit, shown closed as in the storage and mixing step;
Figure 6 is a transverse sectional view, taken along the line S-S of Figure 5;
Figure 7 is a longitudinal sectional view of the mixing unit during the expulsion of the compound through the open outlet;
Figure 8 is a transverse sectional view, taken along the line S-S of Figure 7;
Figure 9 is a longitudinal sectional view of the rotary agitator;
Figure 10 is a longitudinal sectional view of the plunger;
Figure 11 is a front view of a preferred embodiment of the automated apparatus designed to operate with mixing units of the type described in the preceding figures;
Figure 12 is a sectional view, taken along the horizontal line T-T of Figure 11, but with the mixing unit not yet fitted on the transfer slider;
Figures 13 and 14 are a side view and a bottom view of the transfer slider;
Figure 15 is a transverse sectional view, taken along the line U-U, of the slider;
Figure 16 is a front view, in sequence with Figure 11, of the apparatus with the transfer slider and the mixing unit just arrived at the treatment station;
Figure 17 is a sectional view, taken along the line V-V of Figure 16;
Figure 18 is a sectional view, taken along the line Z-Z of Figure 17;
Figure 19 is a detail longitudinal sectional view of the threaded hollow stem and of the corresponding tip with the self-cleaning fixed needle therein;
Figure 20 is a sectional view, taken along the vertical plane, of the apparatus during the introduction of the water-based solution or catalyst and the simultaneous mixing of the components;
Figures 21 and 22 are respective sectional views, taken along the lines Z-Z and V-V, of the apparatus during the expulsion of the compound, after opening the outlet automatically.

The accompanying drawings and particularly the figures of the first three drawings, which show in detail the reusable interchangeable mixing unit, show that the unit is constituted in general by a container 2, which has a circular cross-section and is closed in an upper region by a rotary agitator 1, and in a lower region by a slide valve element 3.

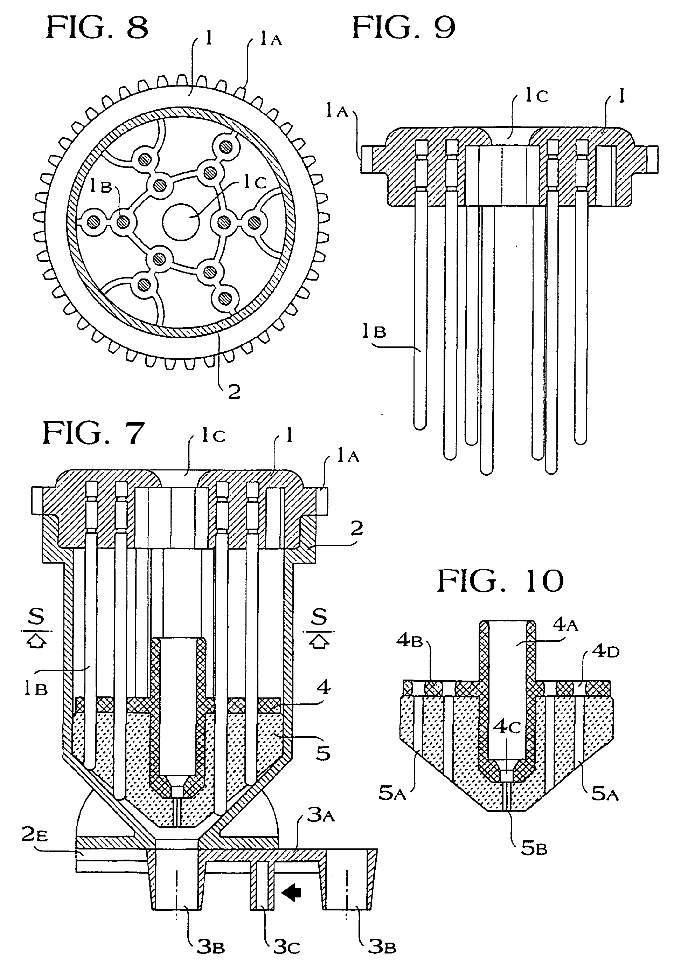

The container 2, which has a constant cross-section in an intermediate region 2B that covers most of its height, has a wider portion 2A in the upper edge for the closing resting of the rotary agitator 1, and in a lower region has a frustum-shaped tapered portion 2C, which ends in an outlet 2D, which faces the center of a transverse guide 2E of the closure element 3, whose linear movements in either direction allow if necessary to open the outlet 2D, aligning with it, as shown in Figure 7, one of two connectors 3B arranged at the two ends of a flat portion 3A that allows closure and from which a grip portion 3C, on which one can act to perform said movements automatically, protrudes centrally downward.

The collar that protrudes outside the container 2 at the wider portion 2A of the upper edge is the collar that allows to rest the mixing unit in a slider 6, where it remains inserted throughout the working cycle, with the container 2 furthermore necessarily motionless during the rotation of the agitator 1 and with the transverse guide 2E orientated so that the grip portion 3C of the element 3 is engaged by the actuation means designed to open and close automatically the outlet 2D.

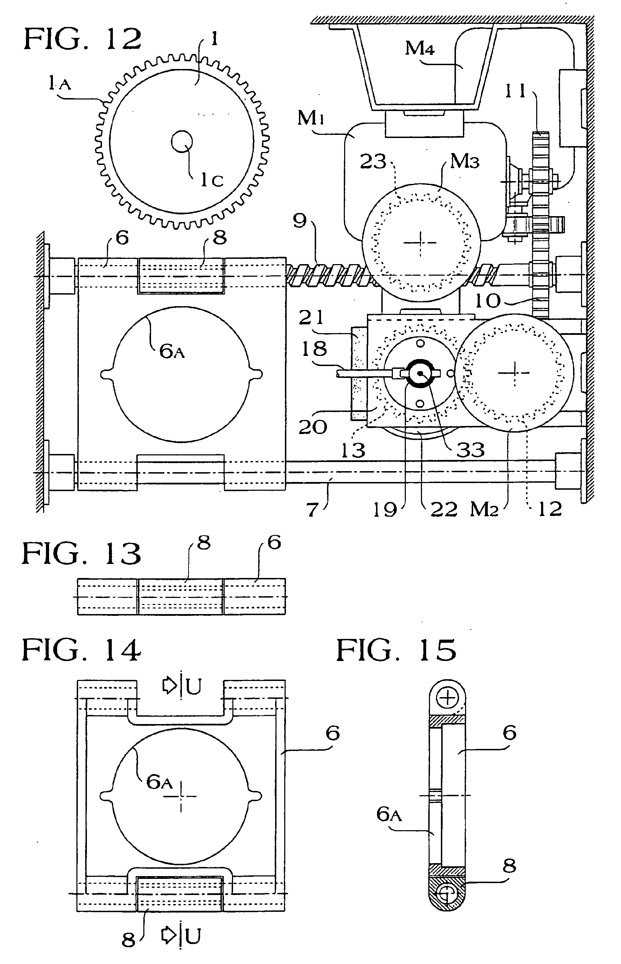

The immobility of the container 2 and the correct orientation of the guide 2E are ensured by two raised portions 2F which, by protruding from two points of the intermediate cylindrical portion 2B that are diametrically opposite and adjacent to the abutment collar, are engaged in the corresponding recesses of a hole 6A of the slider 6 (Figure 12).

The rotary agitator 1 is constituted by a plastic body, from which the teeth of the ring gear 1A protrude radially and from which a plurality of mixing rods 1B, preferably made of stainless steel and used to amalgamate the two or more components, protrude downward parallel to the rotation axis and down to a frustum-shaped bottom 26 of the container.

A plunger is associated with the agitator 1; since it must subsequently expel the mixed compound, the plunger is constituted by a rigid body 4 that is covered in a lower region by a liner 5 made of silicone or other elastic material that can be sterilized in an autoclave.

Both the rigid body 4 and the elastic liner 5 are crossed, in the respective holes 4D and 5A, by the rods 1B, which they follow in their mixing movement and then clean, together with the walls of the mixing chamber, in descending toward the underlying outlet 2D of the container 2.

A sort of capsule 4A which has a circular cross-section protrudes centrally from the two faces of the disk-like portion 4B of the rigid body 4 and at right angles to them, and is designed to accommodate a hollow stem 15, which arrives thereat from the hole 1C of the agitator and which, before imparting to the plunger 4-5 the axial thrust required to expel the mixed compound, assists the mixing process by acting as a pivot for the agitator 1 and by introducing the water-based solution or catalyst directly in the mixing chamber, which it reaches by crossing, with its own nozzle or tip 16, the hole 4C located in the bottom of the capsule 4A and the corresponding cross-shaped slit 5B provided in the liner 5 made of elastic material.

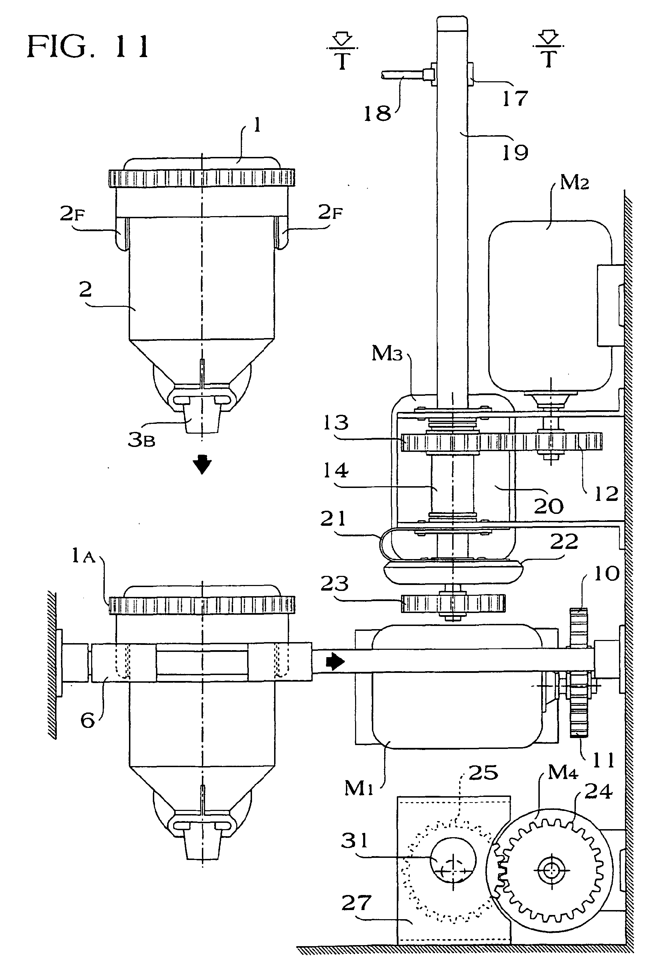

To achieve the expulsion of all the compound mixed in the container 2, the elastic liner 5 also is frustum-shaped in a lower region, but as shown in Figure 7 it tapers less than the bottom of the container 2, so as to rest against it starting from the peripheral region and continue from there, by elastic deformation, gradually toward the center, where there is the outlet 2D, to which the material to be expelled is thus to be conveyed. The mixing units, which as mentioned are filled in due time with a specific quantity of the component in powder form to be mixed or of the gelatinous base to be catalyzed, reach the treatment station of the automated mixing apparatus (Figures 11 to 15) by being conveyed one at a time by the transfer slider 6, which is supported by the horizontal guides 7 and 9, to which it is rigidly coupled, the second guide being a screw that is rigidly coupled to the ring gear 10, which is meshed stably with the ring gear 11 of the electric gearmotor M1, whose rotations determine the transfer of the slider in both directions by way of the linear translational motions of the female thread 8 arranged in a corresponding recess of said slider during its insertion on the threaded guide 9.

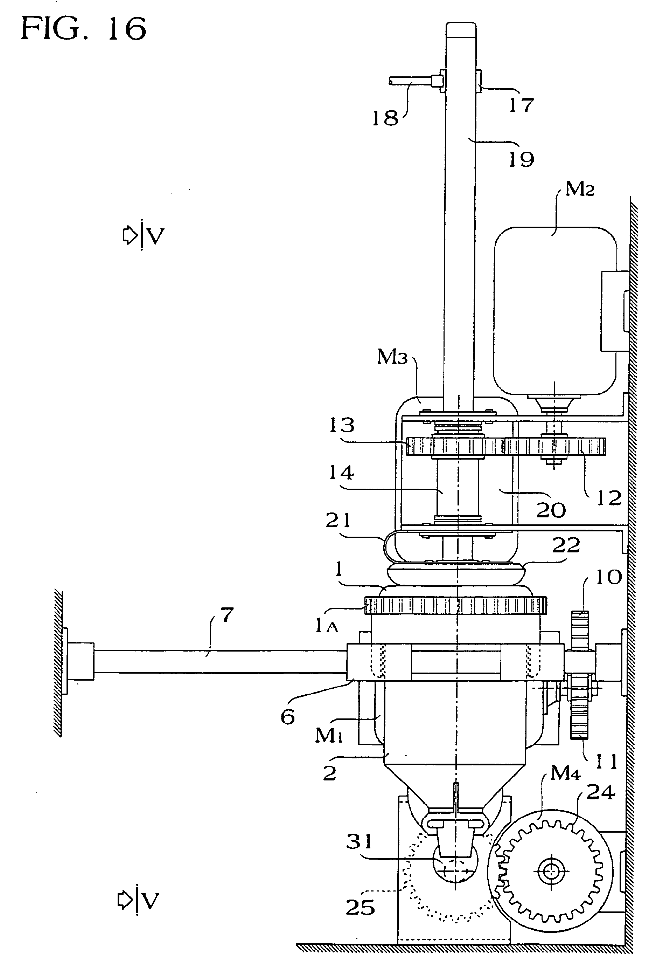

When each mixing unit arrives at the treatment station, i.e., when it is aligned vertically with the hollow stem 15 (Figures 16, 17, and 18), one obtains automatically:
-- the meshing of the ring gear 1A of the rotary agitator 1 in the ring gear 23 of the electric gearmotor M3 meant to move the mixing rods;
-- the insertion of the central grip portion 3C of the closure element 3 between the two wings 31 of the automatic actuation device;
-- the positioning of the rotary agitator 1 under the presser ring 22, which by being pushed by the elastic lamina 21 and guided by the tubular element 35 fixed to the bracket 20 coaxially to the stem 15 keeps the agitator correctly inserted on the container 2 and consequently meshed in the ring gear 23.

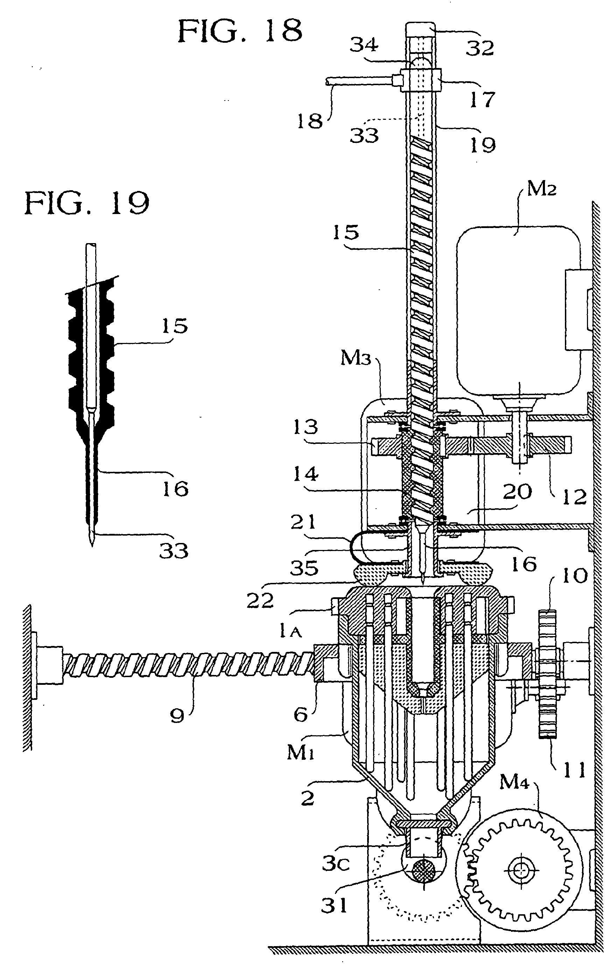

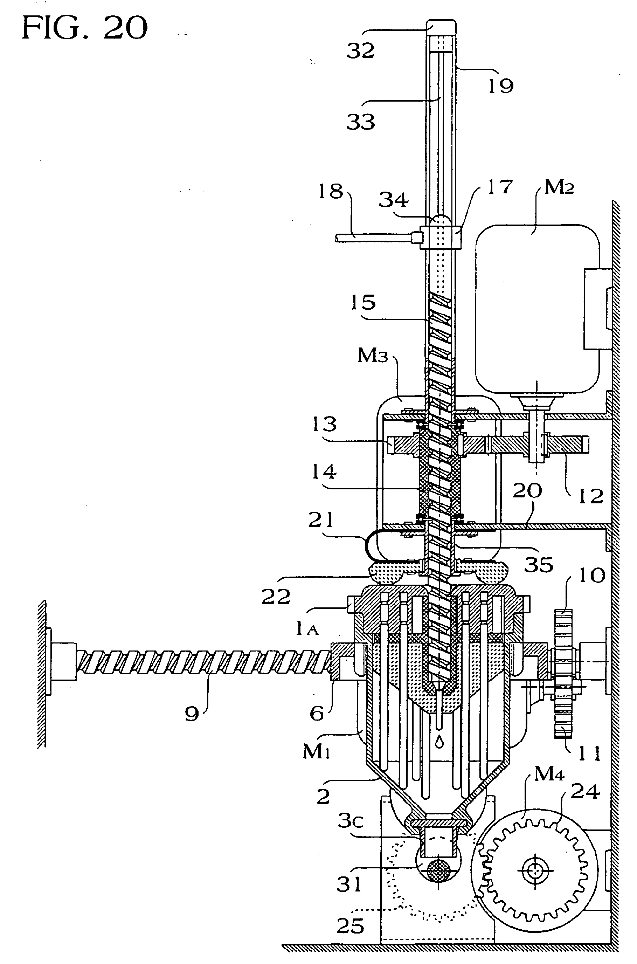

Once it has arrived at the treatment station, the mixing unit can receive the hollow stem 15 which, being threaded but prevented from rotating by the pair of raised portions 17 that are rigidly coupled thereto and engaged in suitable longitudinal slots of the guide 19 fixed to the bracket 20, descends from the position of Figure 18 to the position of Figure 20, by way of the rotations in this direction of the female thread 14, which is supported in the bracket 20 between two axial bearings and is rigidly coupled to the ring gear 13, which meshes stably with the ring gear 12 of the electric gearmotor M2, whose first intervention ceases when the tip 16 of the hollow stem 15 enters the mixing chamber (Figure 20), where the water-based solution or fluid catalyst that arrives from the flexible duct 18 is introduced in addition to the product in powder form or the gelatinous base that is already present in the mixing unit.

This occurs while the stem portion 15 that has entered the mixing unit acts as a pivot for the rotations of the agitator 1, moved by the gearmotor M3.

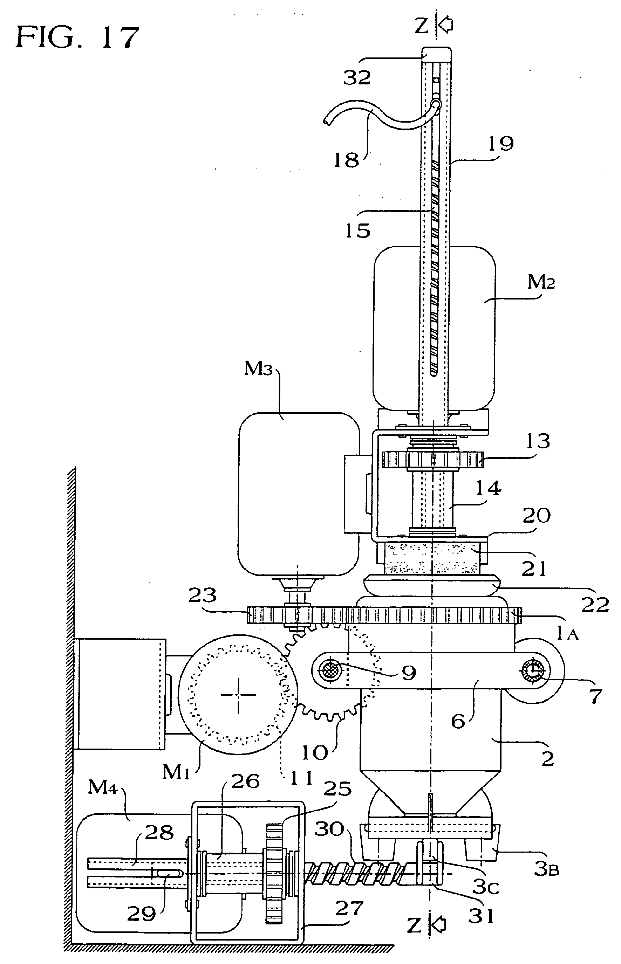

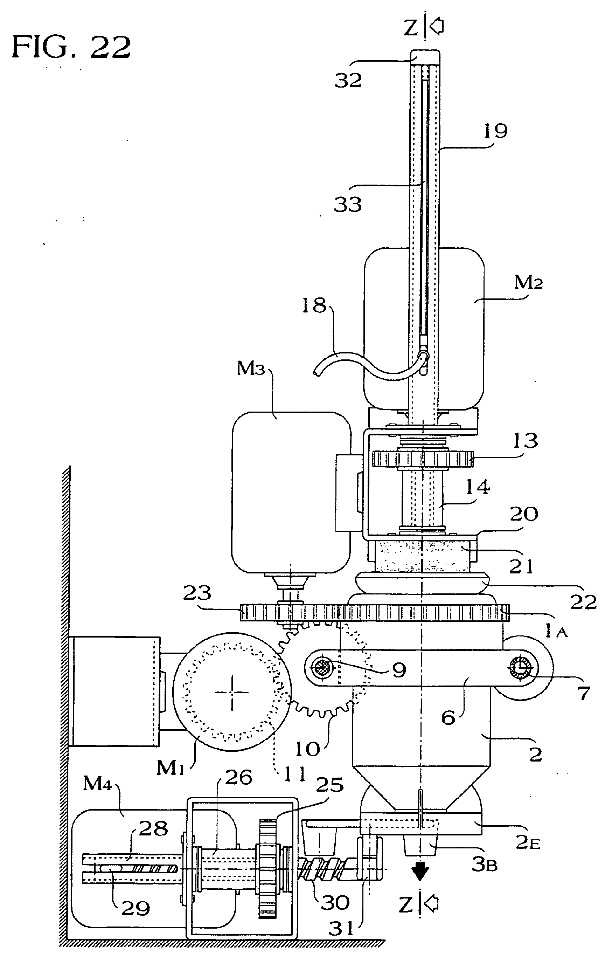

After completing the mixing of the compound, which is moreover optimized by being performed simultaneously with the gradual injection of the fluid component, the rotation imparted to the agitator 1 by the electric gearmotor M3 ceases and the electric gearmotor M4 intervenes to allow the discharge of the mixed compound, moving the closure element 3 from the position of Figure 17 to the position of Figure 22, where one of the two connectors 3B is located at the outlet of the mixing unit.

The ring gear 24 of the gearmotor M4 (Figure 20) is in fact meshed stably with a ring gear 25 that is coaxially rigidly coupled to the female thread 26, which is interposed between two axial bearings in the rigid support 27 and is crossed longitudinally by a screw 30 that has, at one end, a pair of wings 31, which form the means for opening and closing the outlet 2D, with which the grip portion 3C of the element 3 is to be engaged; two raised portions 29 protrude from the other end and, being engaged in suitable longitudinal slots of the guide 28 that protrudes from the support 27, force the spring 30 to perform an axial translational motion in either direction depending on the rotation of the female thread 26.

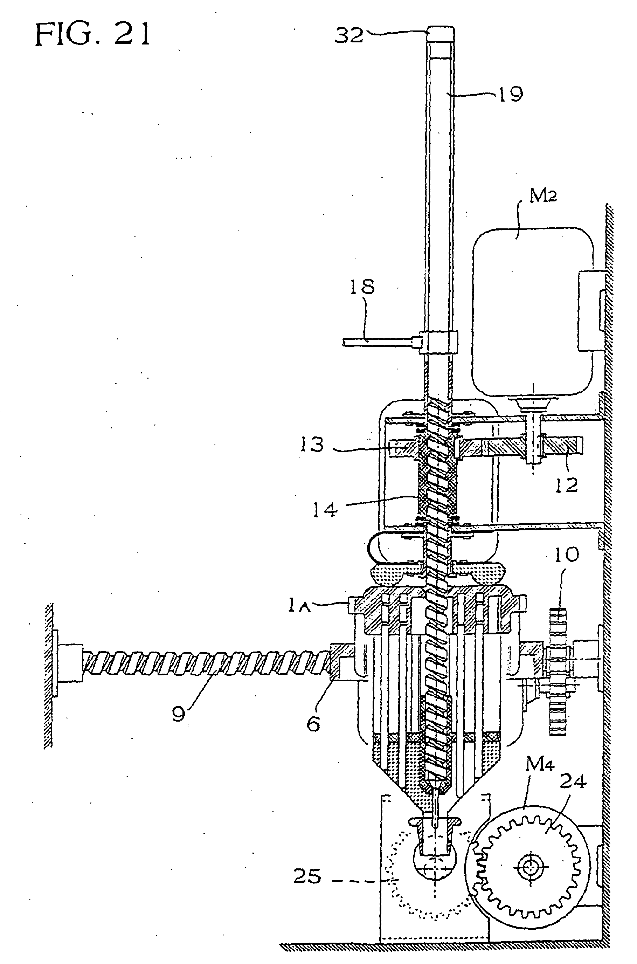

After opening the outlet of the mixing unit and stopping the electric gearmotor M4 provided for this task, the expulsion of the compound begins through one of the two connectors 3B; said compound is pushed by means of the plunger 4-5 by the further descent of the hollow stem 15 from the position of Figure 20 to the position of Figure 21.

After completing the expulsion of the entire compound, freshly mixed and designed to be used immediately, the apparatus automatically activates the electric gearmotor M4, so that again by way of the female thread 26 the closure element 3 returns from the position of Figure 22 to the position of Figure 17, this being useful to facilitate the subsequent removal of the empty mixing unit from the transfer slider 6 but being most of all necessary so that the grip portion 3C of the new mixing unit can then be inserted between the two wings 31.

However, before the electric gearmotor M1 returns the slider 6 to the station of Figure 11, in which the freshly used mixing unit is to be replaced, said station must be freed from the presence of the hollow stem 15, which by way of the reverse rotation of the female thread 14 actuated by the electric gearmotor M2, rises from the position of Figure 21 to the position of Figure 18 and in this circumstance, more specifically in the final portion of its upward movement, the fixed needle 33 automatically frees the nozzle or tip 16 of the hollow stem 15 from any occlusion formed during the expulsion of the mixed compound.

As shown by Figures 18 and 19, the coupling located at the upper end of the hollow stem 15 and provided with the insertion of the duct 18 at one of the two raised portions 17 engaged in the longitudinal slots of the guide 19 is closed in an upper region by a portion 34 made of rubber or other material suitable to form a seal on the needle 33, which is fixed at 32 to the top of the guide 19 and, when the hollow stem 15 is at the upper stroke limit (Figure 18), enters the stem and the corresponding tip 16, from which it protrudes, with the end of the suitably tapered end portion, enough to avoid protruding from the presser ring 22.

As an alternative to this simple and effective manner of ensuring systematically and automatically the efficiency of the apparatus in dispensing the fluid component, it is possible to resort to an equally simple refinement, which consists in cleaning internally the tip 16, at the end of each operating cycle, by expelling immediately and forcefully a very small part of the fluid component to be mixed, which arrives thereat from the flexible duct 18.

The preferred embodiment described and illustrated has been conceived by considering the operating and logistic requirements of most dentists' surgeries and dental laboratories.

This has led to the choice to provide an automated apparatus that is particularly compact and therefore easier to place in work areas that are already equipped, even though this entails the manual intervention of the operator, who by having a reserve of interchangeable mixing units already filled in due time with the product in powder form to be mixed or with the gelatinous base to be catalyzed, positions said mixing units one at a time on the transfer slider of the apparatus and then removes them, again manually, in order to place them aside among those to be washed and sterilized subsequently.

However, one might prefer to the alternating linear movement of the slider 6 the movement of a carousel, which is formed by a set of mixing units arranged in the peripheral seats of a rotating disk or in the carriages of a motorized circuit that passes through a treatment station such as the one already described and replaces mechanically each used mixing unit and also, in some systems, subsequently transfers them to other stations equipped to perform automatically washing, sterilization and filling with further doses of material to be mixed.

The system thus conceived is susceptible of numerous modifications, all of which are within the scope of the appended claims.

This application claims priority from the disclosures in Italian Patent Application No. FO2001A000032.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A system for mixing impression materials for dental use and the like, comprising at least one interchangeable and reusable mixing unit (1, 2) which comprises a container (2) that is closed in an upper region by a rotary agitator (1) and is provided in a lower region with a discharge hole (2D), a mixing chamber defined inside the container (2) and adapted to be filled with part of the components to be mixed, in powder form or gelatinous components, and a plunger (4, 5) that is associated with said rotary agitator (1), said plunger (4, 5) being adapted to follow the rotary agitator (1) in its rotary mixing movement and to axially descend towards said discharge hole (2D) to expel the mixed compound therefrom, **characterized in that** said plunger (4, 5) comprises a capsule (4A), that protrudes centrally from it and that is provided in the bottom with a hole (4C), and **in that** said rotary agitator (1) comprises a hole (1C), said capsule (4A) being designed to accommodate a hollow stem (15) that arrives thereat from said hole (1C) of the rotary agitator (1), said rotary agitator (1) being adapted to be rotatably actuated around said hollow stem (15) acting as a pivot.

2. The system according to claim 1, **characterized in that** said rotary agitator (1) is provided with a ring gear (1A) required for its actuation, the teeth of said ring gear (1A) protruding radially from said rotary agitator (1), and with a plurality of rigid rods (1B) that protrude downward to the bottom of said container (2), said rigid rods (1B) constituting the agitators by means of which the components present in said mixing chamber are to be amalgamated.

3. The system according to the preceding claims, **characterized in that** said container (2) is closed in its lower region by a slide valve element (3) whose linear movement allow to open said discharge hole (2D).

4. The system according to the preceding claims, **characterized in that** said plunger (4, 5) is associated with said rigid rods (1B), which are parallel to the rotation axis of the rotary agitator (1), said plunger (4, 5) being crossed longitudinally by said rigid rods (1B), which it follows in their rotary motion and along which it then descends in order to expel said mixed compound through said discharge hole (2D) located in the bottom of said container (2) freeing of any residue the rigid rods (1B) and the mixing chamber.

5. The system according to the preceding claims, **characterized in that** said plunger is constituted by a rigid body (4) that is covered, in a lower region, by a liner (5) made of silicone or other elastic material, adapted to be sterilized in an autoclave, said rigid body (4) and said liner (5) being crossed in respective holes (4D, 5A) by said rigid rods (1B).

6. The system according to claim 5, **characterized in that** said rigid body (4) comprises a disk-like portion (4B) from the two faces of which said capsule (4A) protrudes centrally, said liner (5) being provided with a cross-shaped slit (5B) corresponding to said hole (4C) located in the bottom of the capsule (4A).

7. The system according to claim 5 or 6, **characterized in that** the bottom of said container (2) and a lower region of said liner (5) of the plunger (4, 5) are both frustum-shaped, the bottom of the container (2) having a different and greater taper than that of said liner (5), so that said plunger (4, 5) rests against the bottom of said container (2) starting from the peripheral region and from there continue gradually, by elastic deformation, toward the center, where there is said discharge hole (2D), to which said mixed compound to be expelled is thus to be guided.

8. The system according to claim 3, **characterized in that** said discharge hole (2D) of said container (2) faces the center of a guide (2E) of said slide valve element (3) that comprises a flat portion (3A) that produces closure of said discharge hole (2D) and at the two ends of which two outlets (3B) are located and from which a grip portion (3C) for an automatic actuation device protrudes centrally downwards, the movements of said slide valve element (3) in either direction allow the opening of said discharge hole (2D), aligning with it one of said two outlets (3B).

9. The system according to the preceding claims, **characterized in that** it comprises an automated apparatus designed to operate said mixing units (1, 2) and comprising a treatment station of said mixing units (1, 2), a transfer slider (6) for transferring the mixing units (1, 2), that contain part of the components to be mixed in powder form or gelatinous base component to be catalyzed, one at time to said treatment station, and an automatic activation device of said slide valve element (3), said one mixing unit (1, 2) being inserted in said transfer slider (6) so as to protrude above and below it, said container (2) having an upper portion (2A) larger than a hole (6A) of said transfer slider (6), which is shaped so as to accommodate, in two diametrically opposite recesses, corresponding raised portions (2F) that protrude from said container (2) in order to keep it motionless during mixing and also with said guide (2E) orientated so that said grip portion (3C) of the slide valve element (3) can be engaged and actuated by means (31) of said automatic actuation device that are designed to open and close automatically the discharge hole (2D).

10. The system according to claim 9, **characterized in that** said transfer slider (6) is supported by horizontal guides (7, 9) to which it is rigidly coupled, the second guide (9) being a screw that is rigidly coupled to a ring gear (10) that is stably meshed in a ring gear (11) of an electric gearmotor (M1), the rotations of which determine the transfer in both directions of said transfer slider (6) by way of the linear translational motions of a female thread (8) located in a corresponding recess of said transfer slider (6) during the insertion thereof on said second guide (9).

11. The system according to claim 9 or 10, **characterized in that** said treatment station comprises a vertical hollow stem (15) designed to introduce the fluid component and to actuate said plunger (4, 5) located inside said mixing unit (1, 2).

12. The system according to claim 11, **characterized in that** said hollow stem (15) is provided with a tip (16), that is adapted to enter in the mixing chamber of the mixing unit (1, 2) in order to introduce, in addition to the product in powder form or the gelatinous base that are already present in the mixing unit, the water-based solution or fluid catalyst that arrive from a flexible duct (18), said hollow stem (15) being threaded, but prevented from rotating by two raised portions (17) rigidly coupled thereto and engaged in suitable longitudinal slots of a guide (19) that is fixed to a bracket (20), and descending as a consequence of the rotations of a female thread (14), which is supported in said bracket (20) between two axial bearings and is rigidly coupled to a ring gear (13) that meshes stably in a ring gear (12) of an electric gearmotor (M2) which stops to act when said tip (16) enters the mixing chamber of the mixing unit (1, 2).

13. The system according to claim 11, **characterized in that** said treatment station comprises an electric gearmotor (M3) provided with a ring gear (23) that meshes said ring gear (1A) of the rotary agitator (1) of the mixing unit (1, 2) to rotate said rotary agitator (1) with the said corresponding rigid rods (1B), the rotation of said rotary agitator (1) by said electric gearmotor (M3) occurs while said hollow stem (15), after entering the mixing unit (1, 2), acts as a pivot for said rotary agitator (1), and the fluid component, to be mixed with the component that is already present in the mixing chamber, exits gradually from said tip (16).

14. The system according to claim 13, **characterized in that** said treatment station comprises a presser ring (22) which, pushed by an elastic lamina (21) and guided by a tubular element (35) that is fixed to said bracket (20) coaxially to said hollow stem (15), keeps said rotary agitator (1), arranged under it, correctly inserted in said container (2) and consequently meshed in said ring gear (23).

15. The system according to claim 11, **characterized in that** said automatic activation device of said slide valve element (3) comprises a gearmotor (M4) that is provided with a ring gear (24) which is arranged so that it meshes stably in a ring gear (25) that is coaxially rigidly coupled to a female thread (26), which is interposed between two axial bearings in a rigid support (27) and is crossed longitudinally by a screw (30) that has, in one end, a pair of wings (31) that constitute said means for opening and closing the discharge hole (2D) with which the grip portion (3C) of the slide valve element (3) is to be engaged and has, at the other end, two protruding raised portions (29), which engage in suitable longitudinal slots of a guide (28) which cantilevers out from said support (27) in order to force said screw (30) to perform an axial translational motion in either direction according to the rotation of the female thread (26), said automatic activation device being adapted to move said slide valve element (3) from the discharge hole (2D) closure position to the position in which one of its two outlets (3B) is located at the discharge hole (2D) of the mixing unit (1, 2) so as to allow the discharge of the mixed compound propelled by said plunger (4, 5) actuated by the further descent of said hollow stem (15), once the rotation imparted to the rotary agitator (1) by the electric gearmotor (M3) ceases, the mixing of the compound being completed, and vice versa once the expulsion of the entire mixed compound has been completed.

16. The system according to claims 12 and 15, **characterized in that** it comprises cleaning means constituted by a fixed needle (33), which during the upward movement of the hollow stem (15), achieved by way of the reverse rotation of the female thread (14) and by means of the electric gearmotor (M2), protrudes from the top of the guide (19) and enters the cavity of the hollow stem (15) through a plug (34) made of rubber or other suitable sealing material and automatically clears the said tip (16) of any occlusion formed during the expulsion of the mixed compound.

17. The system according to claim 16, **characterized in that** said cleaning needle (33) is arranged so that when the hollow stem (15) is at the upper stroke limit it passes longitudinally through the entire hollow stem and the corresponding tip (16), from which it protrudes, with the end of the tapered end portion, enough to avoid protruding from the presser ring (22).

18. The system according to claim 17, **characterized in that** said cleaning means, in addition to or as an alternative of said cleaning needle, are adapted to force the expulsion of a fraction of said fluid component, which arrives from the flexible duct (18) through said tip (16), at the end of each operating cycle, so as to internally clean it.

## Patentansprüche

1. System zum Mischen von Abdruckmaterialien für dentale Anwendung und dergleichen, mit zumindest einer austauschbaren und wieder verwendbaren Mischeinheit (1, 2), die einen Container (2), der in einem oberen Bereich durch einen Drehrührer (1) verschlossen und in einem unteren Bereich mit einem Entladeloch (2D) versehen ist, eine Mischkammer, die innerhalb des Behälters (2) definiert und ausgebildet ist, mit einem Teil der zu mischenden Komponenten in Pulverform oder gelartigen Komponenten befüllt zu sein, und einen Kolben (4, 5) aufweist, der mit dem Drehrührer (1) verbunden ist, wobei der Kolben (4, 5) ausgebildet ist, dem Drehrührer (1) in seiner Drehmischbewegung zu folgen und sich in Richtung des Entladeloches (2D) axial abzusenken, um das gemischte Gemisch daraus auszustoßen, **dadurch gekennzeichnet, dass** der Kolben (4, 5) eine Kapsel (4A) aufweist, die mittig von diesem hervorsteht und in dem Boden mit einem Loch (4C) versehen ist, und der Drehrührer (1) ein Loch (1C) aufweist, wobei die Kapsel (4A) ausgebildet ist, einen Hohlstiel (15) aufzunehmen, der dort von dem Loch (1C) des Drehrührers (1) ankommt, und der Drehrührer (1) ausgebildet ist, drehbar um den Hohlstiel (15), der als eine Drehachse dient, betätigt zu werden.

2. System nach Anspruch 1, **dadurch gekennzeichnet, dass** der Drehrührer (1) mit einem Zahnkranz (1A), der für seine Betätigung erforderlich ist, wobei die Zähne des Zahnkranzes (1A) radial von dem Drehrührer (1) hervorstehen, und mit einer Vielzahl fester Stäbe (1B) versehen ist, die nach unten zu dem Boden des Behälters (2) hervorstehen, wobei die festen Stäbe (1B), die Rührer bilden, durch die die in der Mischkammer vorhandenen Komponenten zu vermischen sind.

3. System nach einem der vorstehenden Ansprüche, **dadurch gekennzeichnet, dass** der Behälter (2) in seinem unteren Bereich durch ein Schiebeventilelement (3) verschlossen ist, dessen Linearbewegung ein Öffnen des Entladeloches (2D) ermöglicht.

4. System nach einem der vorstehenden Ansprüche, **dadurch gekennzeichnet, dass** der Kolben (4, 5) mit den festen Stäben (1B) verbunden ist, die parallel zu der Drehachse des Drehrührers (1) sind, wobei der Kolben (4, 5) in Längsrichtung von den festen Stäben (1B durchsetzt ist, der diesen in ihrer Drehbewegung folgt und entlang derer er sich dann absenkt, um das gemischte Gemisch durch das Entladeloch (2D) auszustoßen, das in dem Boden des Behälters (2) angeordnet ist, und die festen Stäbe (1 B) und die Mischkammer von jeglichen Rückständen befreit.

5. System nach einem der vorstehenden Ansprüche, **dadurch gekennzeichnet, dass** der Kolben durch einen festen Körper (4) gebildet ist, der in einem unteren Bereich mit einer Einlage (5) bedeckt ist, die aus Silikon oder einem anderen elastischen Material hergestellt ist, das geeignet ist, in einem Autoklav sterilisiert zu werden, wobei der feste Körper (4) und die Einlage (5) in entsprechenden Löchern (4D, 5A) durch die festen Stäbe (1B) durchsetzt sind.

6. System nach Anspruch 5, **dadurch gekennzeichnet, dass** der feste Körper (4) einen scheibenartigen Bereich (4B) aufweist, von dessen beiden Seiten die Kapsel (4A) mittig hervorsteht, wobei die Einlage (5) mit einem kreuzförmigen Schlitz (5B) versehen ist, der zu einem Loch (4C) korrespondiert, das in dem Boden der Kapsel (4A) angeordnet ist.

7. System nach Anspruch 5 oder 6, **dadurch gekennzeichnet, dass** sowohl der Boden des Behälters (2) als auch ein unterer Bereich der Einlage (5) des Kolbens (4, 5) kegelstumpfförmig sind, wobei der Boden des Behälters (2) einen unterschiedlichen und größeren Kegel aufweist als die -Einlage (5), so dass der Kolben (4, 5) gegen den Boden des Behälters (2) von dem Randbereich startend und von dort durch eine elastische Verformung allmählich in Richtung der Mitte fortsetzend anliegt, in der sich das Entladeloch (2D) befindet und zu der das auszustoßene gemischte Gemisch folglich hinzuführen ist.

8. System nach Anspruch 3, **dadurch gekennzeichnet, dass** das Entladeloch (2D) des Behälters (2) der Mitte einer Führung (2E) des Schiebeventilelementes (3) gegenüberliegt, welches einen flachen Bereich (3A) aufweist, der die Schließung des Entladeloches (2D) bewirkt und an dessen zwei Enden zwei Auslässe (3B) angeordnet sind und von dem ein Griffbereich (3C) für eine automatische Betätigungsvorrichtung mittig nach unten hervorsteht, wobei die Bewegungen des Schiebeventilelementes (3) in irgendeine Richtung das Öffnen des Entladeloches (2D) ermöglichen, wenn dieses mit einem der beiden Auslässe (3B) übereinstimmt.

9. System nach den vorstehenden Ansprüchen, **dadurch gekennzeichnet, dass** es eine automatisierte Vorrichtung, die ausgebildet ist, die Mischeinheiten (1, 2) zu bearbeiten, und die eine Bearbeitungsstation der Mischeinheiten (1, 2) aufweist, einen Transportschieber (6) zum Transportieren der Mischeinheiten (1, 2), die einen Teil der zu mischenden Komponenten in Pulverform oder eine gelartige Basiskomponente, die zu katalysieren ist, enthalten, einzeln an die Bearbeitungsstationen und eine automatische Aktivierungsvorrichtung für das Schiebeventilelement (3) aufweist, wobei eine Mischeinheit (1, 2) in dem Transportschieber (6) eingefügt ist, so dass sie oberhalb und unterhalb von dieser hervorsteht, wobei der Behälter (2) einen oberen Bereich (2A) aufweist, der größer als ein Loch (6A) des Transportschiebers (6) ist, welcher derart geformt ist, um in zwei diametral gegenüberliegenden Ausnehmungen entsprechende erhabene Bereiche (2F) aufzunehmen, die von dem Behälter (2) hervorstehen, um diesen während des Mischens bewegungslos zu halten, und die mit der Führung (2E) ausgerichtet sind, so dass der Griffbereich (3C) des Schiebeventilelementes (3) mit Einrichtungen (31) einer automatischen Betätigungsvorrichtung in Eingriff kommen und betätigt werden kann, die ausgebildet ist, automatisch das Entladeloch (2D) zu öffnen und zu schließen.

10. System nach Anspruch 9, **dadurch gekennzeichnet, dass** der Transportschieber (6) durch horizontale Führungen (7, 9) getragen wird, mit denen er fest gekoppelt ist, wobei die zweite Führung (9) eine Schraube ist, die fest mit einem Zahnkranz (10) gekoppelt ist, der stabil mit einem Zahnkranz (11) eines elektrischen Getriebemotors (M1) kämmt, dessen Drehungen den Transport in beide Richtungen des Transportschiebers (6) mittels der linearen Translationsbewegungen eines Innengewindes (8) bestimmt, das in einer entsprechenden Aufnahme des Transportschiebers (6) während des Einfügens derselben an der zweiten Führung (9) angeordnet ist.

11. System nach Anspruch 9 oder 10, **dadurch gekennzeichnet, dass** die Bearbeitungsstation einen vertikalen Hohlstiel (15) aufweist, der ausgebildet ist, die Fluidkomponente einzuführen und den Kolben (4, 5) zu betätigen, der innerhalb der Mischeinheit (1, 2) angeordnet ist.

12. System nach Anspruch 11, **dadurch gekennzeichnet, dass** der Hohlstiel (15) mit einer Spitze (16) versehen ist, die ausgebildet ist, in die Mischkammer der Mischeinheit (1, 2) einzudringen, um zusätzlich zu dem Produkt in Pulverform oder der gelartigen Basis, die bereits in der Mischeinheit vorhanden sind, die wasserbasierte Lösung oder den Fluid-Reaktionsbeschleuniger einzuführen, der von einer flexiblen Leitung (18) ankommt, wobei der Hohlstiel (15) mit einem Gewinde versehen ist, jedoch an einem Drehen durch zwei erhabene Bereiche (17) gehindert wird, die daran fest gekoppelt sind und mit geeigneten Längsschlitzen einer Führung (19) eingreifen, die an einem Träger (20) befestigt ist und sich als Folge der Drehungen eines Innengewindes (14) absenkt, welches in dem Träger (20) zwischen zwei Axiallagern getragen ist und fest mit einem Zahnkranz (13) gekoppelt ist, das stabil mit einem Zahnkranz (12) eines elektrischen Getriebemotors (M2) kämmt, der aufhört zu arbeiten, wenn die Spitze (16) in die Mischkammer der Mischeinheit (1, 2) eindringt.

13. System nach Anspruch 11, **dadurch gekennzeichnet, dass** die Bearbeitungsstation einen elektrischen Getriebemotor (M3) aufweist, der mit einem Zahnkranz (23) versehen ist, der mit dem Zahnkranz (1A) des Drehrührers (1) der Mischeinheit (1, 2) kämmt, um den Drehrührer (1) mit den entsprechenden festen Stäben (1B) zu drehen, wobei die Drehung des Drehrührers (1) durch den elektrischen Getriebemotor (M3) geschieht, während der Hohlstiel (15) im Anschluss an das Eindringen in die Mischeinheit (1, 2) als eine Drehachse für den Drehrührer (1) wirkt, und die Fluidkomponente, die mit den Komponenten zu mischen ist, die bereits in der Mischkammer vorhanden sind, allmählich die Spitze (16) verlässt.

14. System nach Anspruch 13, **dadurch gekennzeichnet, dass** die Bearbeitungsstation einen Druckring (22) aufweist, der, durch eine elastische Lamelle (21) gedrückt und durch eine rohrförmiges Element (35) geführt ist, das an dem Träger (20) koaxial mit dem Hohlstiel (15) befestigt ist, den Drehrührer (1), der unter diesem angeordnet ist, korrekt eingefügt in den Behälter (2) und folglich mit dem Zahnkranz (23) kämmend hält.

15. System nach Anspruch 11, **dadurch gekennzeichnet, dass** die automatische Betätigungsvorrichtung des Schiebeventilelementes (3) einen Getriebemotor (M4) aufweist, der mit einem Zahnkranz (24) versehen ist, der ausgebildet ist, so dass er stabil mit einem Zahnkranz (25) kämmt, der koaxial fest mit einem Innengewinde (26) gekoppelt ist, welches zwischen zwei axiale Lager in einen festen Träger (27) zwischengeordnet und in Längsrichtung von einer Schraube (30) durchsetzt ist, die an einem Ende ein Flügelpaar (31) aufweist, das die Einrichtungen zum Öffnen und Schließen des Entladeloches (2D) bildet, mit dem der Griffbereich (3C) des Schiebeventilelementes (3) im Eingriff ist, und an dem anderen Ende zwei hervorstehende erhabene Bereiche (29) aufweist, die mit geeigneten Längsschlitzen einer Führung (28) eingreifen, die von dem Träger (27) hervorspringt, um die Schraube (30) zu zwingen, eine axiale Translationsbewegung in irgendeine Richtung gemäß der Drehung des Innengewindes (26) auszuführen, wobei die automatische Betätigungsvorrichtung ausgebildet ist, das Schiebeventilelement (3) aus der Entladeloch (2D) -Verschlussposition in die Position zu bewegen, in der einer der beiden Auslässe (3B) an dem Entladeloch (2D) der Mischeinheit (1, 2) angeordnet ist, um die Entladung der gemischten Komponente zu ermöglichen, die von dem Kolben (4, 5) angetrieben werden, der durch das weitere Absenken des Hohlstiels (15) betätigt wird, wenn die auf den Drehrührer (1) durch den elektrischen Getriebemotor (M3) aufgebrachte Drehung endet, und das Mischen der Komponenten abgeschlossen ist, und umgekehrt zu bewegen, wenn der Ausstoß des gesamten gemischten Gemisches abgeschlossen ist.

16. System nach Ansprüche 12 und 15, **dadurch gekennzeichnet, dass** es Reinigungsvorrichtungen aufweist, die durch eine befestigte Nadel (33) gebildet werden, die während der Aufwärtsbewegung des Hohlstiels (15), die mittels der umgekehrten Drehung des Innengewindes (14) und durch den elektrischen Getriebemotor (M2) erzielt wird, von der Spitze der Führung (19) hervorsteht und in den Hohlraum des Hohlstiels (15) durch ein Element (34), das aus Gummi oder einem anderen geeigneten Dichtmaterial hergestellt ist, eindringt und automatisch die Spitze (16) von jeglicher Anlagerung reinigt, die während des Ausstoßens des gemischten Gemisches gebildet wird.

17. System nach Anspruch 16, **dadurch gekennzeichnet, dass** die Reinigungsnadel (33) ausgebildet ist, so dass, wenn sich der Hohlstiel (15) an seiner oberen Anschlagsbegrenzung befindet, diese in Längsrichtung durch den gesamten Hohlstiel und die entsprechende Spitze (16) hindurchgeht, von welcher er, mit dem Ende der zugespitzten Endbereiches weit genug hervorsteht, um ein Hervorstehen von dem Druckring (22) zu vermeiden.

18. System nach Anspruch 17, **dadurch gekennzeichnet, dass** die Reinigungseinrichtung zusätzlich oder alternativ zur Reinigungsnadel ausgebildet ist, den Ausstoß einer Fraktion der Fluidkomponente, die von der flexiblen Leitung (18) durch die Spitze (16) ankommt, an dem Ende von jedem Betriebszyklus zu bewirken, um sie intern zu reinigen.

## Revendications

1. Système pour mélanger des matériaux pour empreintes dans le cadre d'une utilisation dentaire et d'autres utilisations similaires, comprenant au moins une unité de mélange (1, 2) interchangeable et réutilisable, qui comprend un récipient (2) fermé dans sa partie supérieure par un agitateur rotatif (1) et est doté au niveau de sa partie inférieure d'un orifice de vidange (2D), une chambre de mélange définie à l'intérieur du récipient (2) et adaptée pour être remplie avec une partie des composants à mélanger, sous forme de poudre ou de composants gélatineux, et un piston (4, 5) qui est associé au dit agitateur rotatif (1), ledit piston (4, 5) étant adapté pour suivre l'agitateur rotatif (1) dans son mouvement de mélange rotatif et pour descendre axialement vers ledit orifice de vidange (2D) afin d'expulser le composé mélangé, **caractérisé en ce que** ledit piston (4, 5) comprend une capsule (4A), qui dépasse centralement de celui-ci et qui est dotée, sur sa partie inférieure d'un orifice (4C), et **en ce que** ledit agitateur rotatif (1) comprend un orifice (1C), ladite capsule (4A) étant conçue pour recevoir une tige creuse (15) qui arrive à ce niveau depuis ledit orifice (1C) de l'agitateur rotatif (1), ledit agitateur rotatif (1) étant adapté pour être actionné de façon rotative autour de ladite tige creuse (15) qui sert de pivot.

2. Système selon la revendication 1, **caractérisé par le fait que** ledit agitateur rotatif (1) est doté d'une couronne dentée (1A) nécessaire pour son actionnement, les dents de ladite couronne dentée (1A) dépassant dans le sens radial dudit agitateur rotatif (1), et d'une pluralité de tiges rigides (1B) qui dépassent vers le bas vers la partie inférieure dudit récipient (2), lesdites tiges rigides (1B) constituant les agitateurs au moyen desquels les composants présents dans ladite chambre de mélange sont amalgamés.

3. Système selon les revendications précédentes, **caractérisé par le fait que** ledit récipient (2) est fermé au niveau de sa partie inférieure par un distributeur à tiroir dont le mouvement linéaire permet d'ouvrir ledit orifice de vidange (2D).

4. Système selon les revendications précédentes, **caractérisé par le fait que** ledit piston (4, 5) est associé avec lesdites tiges rigides (1B), qui sont parallèles à l'axe de rotation de l'agitateur rotatif (1), ledit piston (4, 5) étant traversé longitudinalement par lesdites tiges rigides (1B), qu'il suit dans le mouvement rotatif et le long desquelles il descend ensuite afin d'expulser ledit composé mélangé par ledit orifice de vidange (2D) situé sur la partie inférieure dudit récipient (2), libérant de tout résidu les tiges rigides (1B) et la chambre de mélange.

5. Système selon les revendications précédentes, **caractérisé par le fait que** ledit piston est constitué par un corps rigide (4) qui est recouvert, dans sa partie inférieure, par une enveloppe (5) fabriquée en silicone ou autre matériau élastique, adapté à la stérilisation dans un autoclave, ledit corps rigide (4) et ladite enveloppe (5) étant traversés, dans leurs orifices respectifs (4D, 5A), par lesdites tiges rigides (1B).

6. Système selon la revendication 5, **caractérisé par le fait que** ledit corps rigide (4) comprend une partie en forme de disque (4B), des deux faces de laquelle ladite capsule (4A) dépasse centralement, ladite enveloppe (5) étant dotée d'une fente en forme de croix (5B) correspondant au dit orifice (4C) situé sur la partie inférieure de la capsule (4A).

7. Système selon la revendication 5 ou 6, **caractérisé par le fait que** la partie inférieure dudit récipient (2) et une zone inférieure de ladite enveloppe (5) du piston (4, 5), sont toutes deux tronconiques, la partie inférieure du récipient (2) ayant une inclinaison différente et supérieure à celle de ladite enveloppe (5), de sorte que ledit piston (4, 5) repose contre la partie inférieure dudit récipient (2) en partant de la partie périphérique et, de là, en continuant progressivement, par déformation élastique, vers le centre, où se trouve ledit orifice de vidange (2D), vers lequel ledit composé mélangé à expulser doit ensuite être guidé.

8. Système selon la revendication 3, **caractérisé par le fait que** ledit orifice de vidange (2D) dudit récipient (2) se trouve en face du centre d'un guide (2E) dudit distributeur à tiroir (3) qui comprend une partie plate (3A) qui produit la fermeture dudit orifice de vidange (2D) et aux deux extrémités de laquelle deux sorties (3B) sont positionnées et de laquelle une partie poignée (3C) pour un dispositif d'actionnement automatique dépasse centralement vers le bas, les mouvements dudit distributeur à tiroir (3) dans l'une ou l'autre direction permettant l'ouverture dudit orifice de vidange (2D), en l'alignant avec l'une des deux sorties (3B).

9. Système selon les revendications précédentes, **caractérisé par le fait qu'**il comprend un appareil automatisé conçu pour faire fonctionner lesdites unités de mélange (1, 2) et comprenant une station de traitement desdites unités de mélange (1, 2), un coulisseau de transfert (6) pour transférer les unités de mélange (1, 2), qui contiennent une partie des composants à mélanger sous forme de poudre ou de composant de base gélatineux à catalyser, un à la fois vers ladite station de traitement, et un dispositif d'activation automatique dudit distributeur à tiroir (3), ladite unité de mélange (1, 2) étant insérée dans ledit coulisseau de transfert (6) de façon à dépasser au-dessus et au-dessous de celui-ci, ledit récipient (2) ayant une partie supérieure (2A) plus grande qu'un orifice (6A) dudit coulisseau de transfert (6), formé de façon à pouvoir recevoir, dans deux creux diamétralement opposés, les parties surélevées (2F) correspondantes qui dépassent dudit récipient (2) afin de le maintenir immobile pendant le mélange et également avec ledit guide (2^{E}) orienté de façon que la partie poignée (3C) du distributeur à tiroir (3) puisse être engagée et actionnée au moyen (31) dudit dispositif d'actionnement automatique conçu pour ouvrir et pour fermer automatiquement l'orifice de vidange (2D).

10. Système selon la revendication 9, **caractérisé par le fait que** ledit coulisseau de transfert (6) est supporté par deux guides horizontaux (7, 9) auxquels il est couplé de façon rigide, le second guide (9) étant une vis qui est couplée rigidement à une couronne dentée (10) engrenée de façon stable dans la couronne dentée (11) d'un moteur à engrenages électrique (M1), dont les rotations déterminent le transfert dans les deux directions dudit coulisseau de transfert (6) au moyen des mouvements de translation linéaires d'un filetage femelle (8) situé dans un creux correspondant dudit coulisseau de transfert (6) pendant l'insertion sur ledit second guide (9).

11. Système selon la revendication 9 ou 10, **caractérisé par le fait que** ladite station de traitement comprend une tige creuse verticale (15) conçue pour introduire le composant liquide et pour actionner ledit piston (4, 5) situé à l'intérieur de ladite unité de mélange (1, 2).

12. Système selon la revendication 11, **caractérisé par le fait que** ladite tige creuse (15) est dotée d'une pointe (16) adaptée pour pénétrer dans la chambre de mélange de l'unité de mélange (1, 2) afin d'introduire, en plus du produit sous forme de poudre ou de la base gélatineuse déjà présents dans l'unité de mélange, la solution à base d'eau ou le catalyseur liquide amenés par un tuyau flexible (18), ladite tige creuse (15) étant filetée, mais empêchée de tourner par deux parties surélevées (17) qui y sont couplées de façon rigide et engagées dans les fentes longitudinales adaptées d'un guide (19) fixé sur un support (20), et descendant sous l'effet des rotations d'un filetage femelle (14), qui est supporté par ledit support (20) entre deux paliers longitudinaux et est rigidement couplé à une couronne dentée (13) qui s'engrène de façon régulière avec la couronne dentée (12) du moteur à engrenages électrique (M2) qui arrête de fonctionner lorsque ladite pointe (16) pénètre dans la chambre de mélange de l'unité de mélange (1,2).

13. Système selon la revendication 11, **caractérisé par le fait que** ladite station de traitement comprend un moteur à engrenages électrique (M3) doté d'une couronne dentée (23) s'engrenant avec ladite couronne dentée (1A) de l'agitateur rotatif (1) de l'unité de mélange (1, 2) pour faire tourner ledit agitateur rotatif (1) avec lesdites tiges rigides correspondantes (1B), la rotation dudit agitateur rotatif (1) par ledit moteur à engrenages électrique (M3) se faisant tandis que ladite tige creuse (15) après être entrée dans l'unité de mélange (1, 2), agit comme un pivot pour ledit agitateur rotatif (1), et le composant liquide, à mélanger avec le composant se trouvant déjà dans la chambre de mélange, sort progressivement de ladite pointe (16).

14. Système selon la revendication 13, **caractérisé par le fait que** ladite station de traitement comprend une bague de presse (22) qui, lorsqu'elle est poussée par une lamelle élastique (21) et guidée par un élément tubulaire (35) fixé au dit support (20) coaxialement à ladite tige creuse (15), maintient ledit agitateur rotatif (1), disposé sous elle, correctement inséré dans ledit récipient (2) et par conséquent engrené avec ladite couronne dentée (23).

15. Système selon la revendication 11, **caractérisé par le fait que** ledit dispositif d'activation automatique dudit distributeur à tiroir (3) comprend un moteur à engrenages (M4) doté d'une couronne dentée (24) qui est disposée de façon à s'engager de façon stable dans une couronne dentée (25) couplée rigidement et dans le sens coaxial à un filetage femelle (26), qui est interposé entre deux paliers axiaux dans un support rigide (27) et est traversé dans le sens longitudinal par une vis (30) dotée, sur une extrémité d'une paire d'ailettes (31) qui constituent ledit dispositif d'ouverture et de fermeture de l'orifice de vidange (2D) avec lequel la partie poignée (3C) du distributeur à tiroir (3) doit être engagée, et comporte, sur l'autre extrémité, deux parties surélevées saillantes (29), qui s'engagent dans les fentes longitudinales adaptées d'un guide (28) en porte à faux par rapport au dit support (27), afin de forcer ladite vis (30) à effectuer un mouvement de translation axial dans un sens ou dans l'autre, selon la rotation du filetage femelle (26), ledit dispositif d'activation automatique étant adapté pour déplacer ledit distributeur à tiroir (3) de la position de fermeture de l'orifice de vidange (2D) vers la position dans laquelle l'une de ses deux sorties (3B) est située au niveau de l'orifice de vidange (2D) de l'unité de mélange (1, 2) de façon à permettre la vidange du composé mélangé poussé par ledit piston (4, 5) actionné par la descente de ladite tige creuse (15), une fois que la rotation imposée à l'agitateur rotatif (1) par le moteur à engrenages électrique (M3) a cessé, le mélange du composé étant terminé, et vice versa une fois que l'expulsion de l'intégralité du composé mélangé est terminée.

16. Système selon les revendications 12 et 15, **caractérisé par le fait qu'**il comprend des moyens de nettoyage constitués par une aiguille fixe (33), qui, pendant le mouvement vers le haut de la tige creuse (15) effectué en inversant la rotation du filetage femelle (14) et en utilisant le moteur à engrenages électrique (M2), dépasse de la partie supérieure du guide (19) et pénètre dans la cavité de la tige creuse (15) en traversant un bouchon (34) fabriqué en caoutchouc ou en tout autre matériau d'étanchéité adapté et nettoie automatiquement ladite pointe (16) de toute occlusion formée pendant l'expulsion du composé mélangé.

17. Système selon la revendication 16, **caractérisé par le fait que** ladite aiguille de nettoyage (33) est disposée de sorte que lorsque la tige creuse (15) est remontée au maximum, elle traverse longitudinalement toute la tige creuse et la pointe correspondante (16), de laquelle elle dépasse, avec l'extrémité de la partie conique, suffisamment pour éviter de dépasser de la bague de presse (22)

18. Système selon la revendication 17, **caractérisé par le fait que** lesdits moyens de nettoyage, en plus de, ou alternativement à ladite aiguille de nettoyage, sont adaptés pour forcer l'expulsion d'une fraction dudit composant liquide, qui arrive depuis le tuyau flexible (18) en traversant ladite pointe (16), à la fin de chaque cycle de fonctionnement, de façon à en nettoyer l'intérieur.
